# EUROPÄISCHE PATENTSCHRIFT

(11) **EP 2 497 919 B1**
(45) Veröffentlichungstag und Bekanntmachung des Hinweises auf die Patenterteilung: **25.12.2019**
(21) Anmeldenummer: 12154803.6
(22) Anmeldetag: 10.02.2012
(51) Int. Cl.: F01P 11/10

(54) **LÜFTERZARGE UND VERFAHREN ZUR HERSTELLUNG EINER LÜFTERZARGE AUS KUNSTSTOFF, INSBESONDERE FÜR KRAFTFAHRZEUGKÜLLER**
FAN SHROUD AND METHOD TO PRODUCE A FAN SHROUD MADE OF PLASTIC, PARTICULARLY FOR VEHICLE RADIATORS
CHÂSSIS DE VENTILATEUR ET PROCÉDÉ DE FABRICATION D'UN CHÂSSIS DE VENTILATEUR EN PLASTIQUE, EN PARTICULIER POUR REFROIDISSEUR DE VÉHICULE AUTOMOBILE

(30) Priorität: 11.03.2011 DE 202011003858 U
(43) Veröffentlichungstag der Anmeldung: 12.09.2012
(73) Patentinhaber: Wirthwein AG, 97993 Creglingen (DE)
(72) Erfinder: Wirthwein, Marcus, 97993 Creglingen (DE)
(74) Vertreter: ETL Wablat & Kollegen Patent- und Rechtsanwaltsgesellschaft mbH

(56) Entgegenhaltungen:
- EP-A1- 2 492 127
- FR-A1- 2 971 744
- JP-A- 2004 257 362
- JP-A- 2008 291 664

## Beschreibung

Die Erfindung bezieht sich auf eine Lüfterzarge und auf ein Verfahren zur Herstellung einer Lüfterzarge aus Kunststoff, insbesondere für Kraftfahrzeugkühler, aus einem Basisteil mit mindestens einer Öffnung und aus mindestens einer daran schwenkbar gelagerten Klappe.

Derartige Lüfterzargen sind dazu bestimmt, die Lüfter bzw. Ventilatoren für Kühler von Kraftfahrzeugen aufzunehmen und die Luftzufuhr zum Kühler zu regeln. Dazu haben sie zusätzlich zur Ventilatoraufnahme Öffnungen, die mit schwenkbaren Klappen verschlossen sind, wenn der Ventilator läuft und sich bei Luftanströmung, d. h. während der Fahrt, automatisch öffnen und somit den Antrieb des Ventilators unnötig machen. Diese Klappen wurden, z. B. gemäß JP 2008 291664 A, bisher als gesonderte Kunststoff-Spritzgussteile hergestellt. Ihre Lagerzapfen wurden in offene Lagerbuchsen eingeschnappt. Auch Konstruktionen mit gesonderten metallischen Lagerstiften sind bekannt.

Die Konstruktionen erfordern einen hohen Herstellungs- und Montageaufwand. Zarge und Klappen müssen gesondert hergestellt, zur Montage zusammengeführt und manuell oder automatisch montiert werden. Außerdem sind die Teile bruchgefährdet, weil bei der Montage die Lagerbuchsen bzw. die Aufnahmen für die Lagerstifte aufgeweitet werden. Zudem können die Klappen bei außergewöhnlichen Beanspruchungen herausfallen.

Weiterhin ist vorgeschlagen worden, die Zarge und mindestens eine Klappe in einem einzigen Herstellungsschritt durch einen Formvorgang gemeinsam herzustellen (nachveröffentlichte ältere EP 2 492 127 A1).

### Aufgabe und Lösung

Aufgabe der Erfindung ist es daher, eine Lüfterzarge und ein Verfahren zur Herstellung einer Lüfterzarge zu schaffen, wobei die Lüfterzarge und das Verfahren bezüglich des Herstellungs- und Montageaufwands verbessert und besonders betriebssicher sind.

Zur Lösung dieser Aufgabe schlägt die Erfindung ein Verfahren mit den Merkmalen des Anspruchs 1 und eine Lüfterzarge mit den Merkmalen des Anspruchs 10 vor. Weiterbildungen der Erfindung sind Gegenstand von Unteransprüchen.

Es ist also nur notwendig, ein einziges Spritzgussteil herzustellen, an dem sowohl die Lüfterzarge als auch eine oder mehrere Klappen vorgesehen sind. Es entfallen somit die zur Zusammenführung und Montage der Klappen notwendigen Arbeitsschritte.

Die Klappe und das Basisteil sind dabei jeweils voneinander getrennt. Das kann vorzugsweise dadurch bewerkstelligt werden, dass zwischen Lagerbuchsen und Lagerzapfen ein umlaufender Spalt besteht, der Raum für einen Formschieber einer Spritzgussform lässt. Dieser Spalt sollte ohnehin zur Beweglichkeit der Klappenlager vorgesehen sein. Er kann durch einen Formschieber der Spritzgussform in Form einer dünnen Hülse gebildet sein, die mit ihrer Innenseite den Außenumfang des Lagerzapfen und mit der Außenseite die Lagerfläche der Lagerbuchse bestimmt. Für diese Gestaltung ist es vorteilhaft, wenn die Lagerbuchsen in Lager-Achsrichtung einseitig frei zugänglich sind. So kann die Lüfterzarge besonders vorteilhaft gestaltet werden, wenn die wenigstens eine Lagerbuchse einen als halbringförmiger Bügel aus der Fläche des Basisteil des herausstehenden Abschnitts aufweist, der in eine rinnenförmige Vertiefung im Basisteil mündet.

Die Klappe kann in Herstellungs-Position von der Lüfterzarge unter einem Winkel, vorzugsweise einem rechten Winkel, von der Fläche des Basisteils abstehen. Einerseits ermöglicht diese Anordnung, dass die Klappe gegenüber der ihr zugehörigen Öffnung eine Überlappung aufweisen kann und andererseits ermöglicht es die leichte Entformung des Spritzgussteils. Die Klappe, die zwischen Öffnungs- und Schließstellung schwenkbar ist, sollte vorteilhaft in der Herstellungs-Position in Öffnungsstellung sein. Etwaige zwischen Zarge und Klappe gebildete Grate werden automatisch abgeschert, sobald die Klappe bewegt wird.

### Kurzbeschreibung der Zeichnungen

Ein Ausführungsbeispiel der Erfindung ist in der Zeichnung schematisch dargestellt und wird im Folgenden näher erläutert. Es zeigen:
- Fig. 1: eine schematische Draufsicht auf eine Lüfterzarge,
- Fig. 2: einen schematischen Querschnitt durch einen Teil einer Lüfterzarge und der zugehörigen Spritzgussform,
- Fig. 3: eine schematische perspektivische Ansicht eines Teils einer Lüfterzarge in der Öffnungsposition der Klappe und
- Fig. 4: eine Ansicht wie in Figur 3 in geschlossener Position der Klappe.

### Detaillierte Beschreibung eines bevorzugten Ausführungsbeispiels

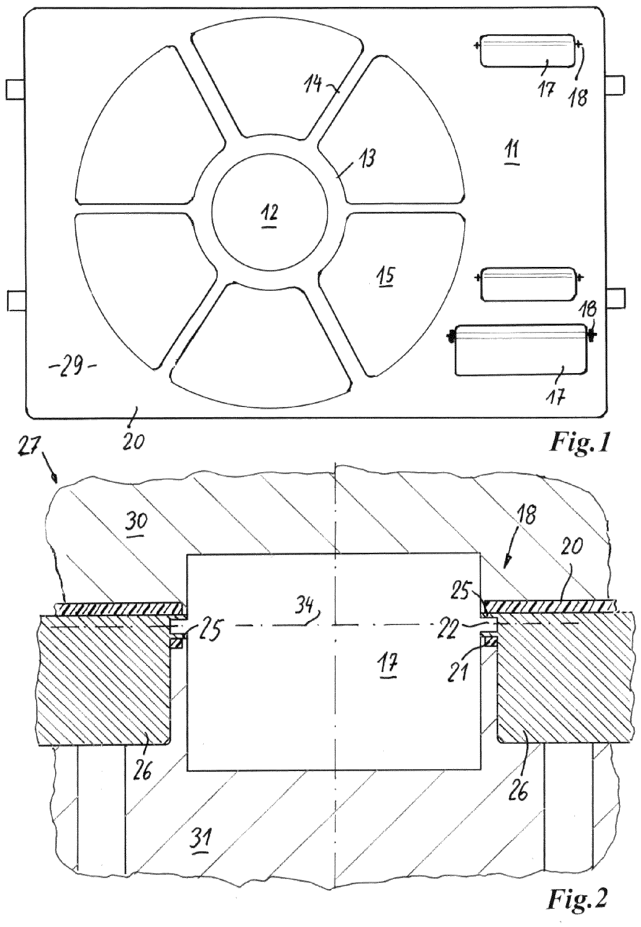

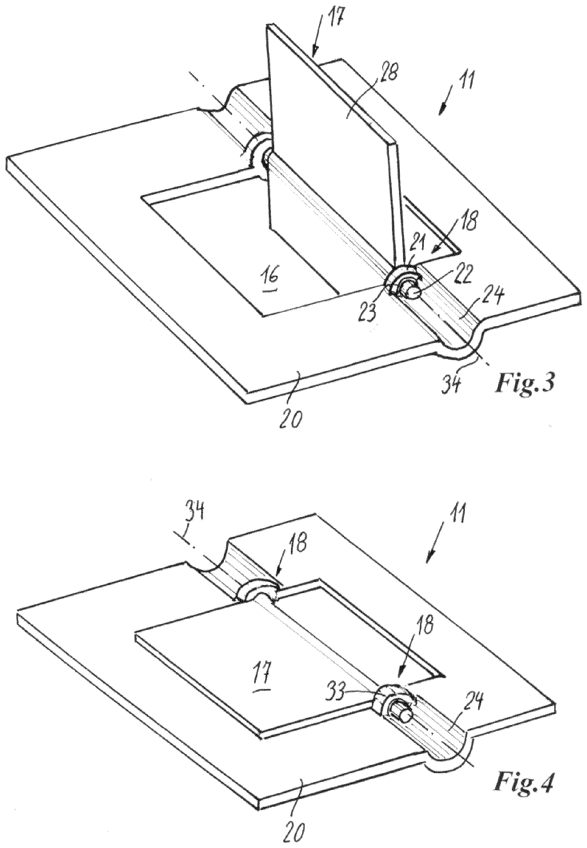

Figur 1 zeigt eine Lüfterzarge 11 mit einem Basisteil 20, das als großflächiges im wesentlichen flaches und rechteckiges Kunststoff-Spritzgussteil ausgebildet ist. Sie dient als Halterung eines nicht dargestellten, meist elektrisch betriebenen Lüfters oder Ventilators für einen Kühler eines Kraftfahrzeugs. Der Lüfter wird in eine Öffnung 12 eingebaut, die von einem Ringsteg 13 umgeben ist, der von sternförmigen Stegen 14 getragen wird. Zwischen diesen sind durch Durchtrittsöffnungen 15 für die zum Kühler strömende Luft gebildet. In der Fläche des Basisteil 20 der Lüfterzarge 11 sind mehrere, im vorliegenden Beispiel drei, Öffnungen 16 vorgesehen, die im Wesentlichen rechteckig sind und vom Klappen 17 verschließbar sind (siehe auch Figuren 3 und 4). Die Klappen 17 sind um eine Schwenklagerung 18 schwenkbar, deren Achsen 34 horizontal und gegenüber der Klappenfläche außermittig nach oben versetzt angeordnet sind.

Wie aus den Figuren 3 und 4 zu erkennen ist, sind die Klappen so ausgebildet, dass ihre Fläche 28 den Rand der Öffnung 16 auf der hier gezeigten Rückseite 29 des Basisteil 20 überlappt, wobei der kleinere Flächenanteil die in Fahrtrichtung des Kraftfahrzeuges vordere Fläche des Basisteils 20 überlappt. Dazu ist die Klappe schwach z-förmig mit einem Knick im Bereich der Schwenklagerung 18 ausgebildet.

Die Schwenklagerung 18 weist auf zwei Seiten jeder Klappe 17 eine Lagerbuchse 21 auf, in die je ein Lagerzapfen 22 der Klappe 17 eingreift. Zwischen Lagerbuchsen 21 und Lagerzapfen 22 ist ein Luftspalt 23 für die freie Beweglichkeit der Schwenklager vorgesehen. Anschließend an die Schwenklagerung und in deren Achsrichtung 34 ist im Basisteil 20 je eine Mulde 24 ausgebildet, die die aus Lagerbuchsen 21 und Lagerzapfen 22 bestehende Schwenklagerung 18 in Achsrichtung frei zugänglich macht.

Figur 3 zeigt einen Teil der Lüfterzarge 11 schematisch in ihrer Herstellungsposition. Dabei steht die Klappe 17 unter einem Winkel, vorzugsweise unter einem rechten Winkel vom Basisteil ab. Die gesamte Lüfterzarge 11, also Basisteil 20 und die Klappen 17, werden in einem Spritzgussvorgang hergestellt. Die senkrechte Stellung der Klappen 17 ermöglicht eine Formtrennebene parallel zur Fläche des Basisteils. Die Schwenklagerung 18 wird dadurch hergestellt, dass hülsenförmige Vorsprünge 25 von Formschiebern 26 der Spritzgussform 27 zwischen Lagerzapfen 22 und Lagerbuchsen 21 so eingreifen, dass die Außenfläche der Hülse 25 die Innenfläche der Lagerbuchse 21 und die Innenfläche der Hülse 25 den Außenumfang des Lagerzapfen 22 formt. Zur Entformung der Lüfterzarge 11 werden die beiden Formhälften 30,31 der Spritzgussform 27 senkrecht zur Fläche des Basisteil 20 auseinander gefahren, nachdem die Formschieber 26 von der Klappe 17 hinweg auseinander gefahren wurden. Es ist zu erkennen, dass die Zugänglichkeit der Schwenklagerung 18 und die Bewegung der Formschieber 26 durch die Mulde 24 im Basisteil 20 erleichtert bzw. ermöglicht wird. Diese Mulde 24 kann sich direkt an den in Figur 3 und 4 unteren Abschnitt der Lagerbuchsen 21 anschließen. Der dort obere Abschnitt 33 der Lagerbuchsen bildet einen von der Fläche des Basisteil 20 vorstehenden bügelartigen Vorsprung. Es kann also mit einem Spritzgussvorgang die gesamte Lüfterzarge 11 hergestellt werden, obwohl sie aus dem Basisteil 20 und den frei schwenkbaren beweglichen Klappen 17 besteht. Der Spritzgussteil besteht vorzugsweise aus einem faserverstärkten Polyamid.

Aus Figur 4 ist zu erkennen, dass die Klappe 17, wenn sie in die Schließstellung gebracht wird, in der sie die Öffnung 16 verschließt, eventuell entstehende Grate im Bereich der Schwenklagerung abgeschert hat und nunmehr durch den Fahrtwind, der auf die Vorderseite der Lüfterzarge 11 trifft, in eine Öffnungsstellung geschwenkt werden kann, um eine Luftströmung auf den Kühler zu leiten, wenn der Lüfter abgeschaltet ist. Dies wird von den unterschiedlich großen Flächenabschnitte der Klappe 17 auf beiden Seiten der Achse 34 der Schwenklagerung ermöglicht. Wenn der Lüfter läuft, schließen sich die Klappen 17 einerseits unter der Schwerkraft der größeren Klappenfläche 28 und andererseits durch den relativen Überdruck, der nunmehr vom Lüfter auf der Rückseite 29 der Lüfterzarge 11 erzeugt wird.

Die Tatsache, dass hier die gesamte Lüfterzarge 11 auch mit ihren beweglichen Klappen 17 in einem Schuss ohne Notwendigkeit späterer Montage hergestellt ist, erspart weitere Arbeitsgänge. Die durch die Hülsen 25 gebildeten Freiräume bilden den für die freie Beweglichkeit der Klappe notwendige Luftspalt 23. Dabei sind die Klappen gegenüber dem Basisteil 20 gänzlich umschlossen, ohne dass, wie bei der Einschnapp-Montage erforderlich, die Lagerbuchsen in ihrem Umfang Öffnungen aufweisen müssen. Es ist zu erkennen, dass die Lüfterzarge 11, obwohl sie hauptsächlich für Kraftfahrzeuge eingesetzt wird, auch für ähnliche andere Anwendungen einsetzbar ist.

## Patentansprüche

1. Verfahren zur Herstellung einer Lüfterzarge aus Kunststoff, insbesondere für Kraftfahrzeugkühler, aus einem Basisteil (20) mit mindestens einer Öffnung (16) und aus mindestens einer daran schwenkbar gelagerten Klappe (17), wobei die Lüfterzarge (1) für die Klappe (17) wenigstens eine Schwenklagerung (18) mit wenigstens zwei Lagerbuchsen (21) und zugehörigen Lagerzapfen (22) aufweist, alle Lagerbuchsen (21) die Lagerzapfen (22) gänzlich umschließen und die Lagerzapfen (22) einander entgegengesetzt gerichtet sind, wobei
die gesamte Lüfterzarge (1) aus Basisteil (20) und Klappe (17) aus demselben Kunststoff-Spritzgussteil in einer Spritzgussform (27) in einem Spritzgussvorgang hergestellt wird,
eine senkrechte Stellung der Klappe (17) zur Fläche des Basisteiles (20) eine Formtrennebene parallel zur Fläche des Basisteils (20) bildet und
die Schwenklagerung (18) der Klappe (17) dadurch hergestellt wird, dass hülsen förmige Vorsprünge (25) von Formschiebern (26) der Spritzgussform (27) zwischen Lagerzapfen (22) und Lagerbuchsen (21) so eingreifen, dass die Außenfläche der Hülse (25) die Innenfläche der Lagerbuchse (21) und die Innenfläche der Hülse (25) den Außenumfang des Lagerzapfens (22) formen,
**dadurch gekennzeichnet,**
**dass** die Klappe (17) sich nach dem Ausformen zu beiden Seiten der Achse (34) der Schwenklagerung (18), insbesondere außermittig, erstreckt, bezüglich einer durch Luftanströmung gegen die Klappe (17) ausgeübten Schwenkkraft unterschiedlich wirksame Flächenbereiche auf beiden Seiten schafft, wobei
die Klappe (17) den Rand der Öffnung (16) auf beiden Seiten der Schwenklagerungsachse (34) von entgegengesetzten Richtungen her zumindest teilweise überlappt.

2. Verfahren nach Anspruch 1, **dadurch gekennzeichnet, dass** die Klappe (17) und das Basisteil (20) voneinander getrennt sind.

3. Verfahren nach Anspruch 1 oder 2, **dadurch gekennzeichnet, dass** zwischen der Lagerbuchse (21) und dem Lagerzapfen (22) ein umlaufender Spalt (23) gebildet wird, der Raum für einen Formschieber (26) der Spritzgussform (27) lässt.

4. Verfahren nach einem oder mehreren der vorhergehenden Ansprüche, **dadurch gekennzeichnet, dass** die Lagerbuchsen (21) in Achsrichtung einseitig frei zugänglich sind.

5. Verfahren nach einem oder mehreren der vorhergehenden Ansprüche, **dadurch gekennzeichnet, dass** das Basisteil (20) großflächig ist und eine Ventilatoröffnung (12,15) und eine oder mehrere Öffnungen (16) für Klappen (17) aufweist, die aus demselben Montage-Spritzgussteil bestehen wie das Basisteil (20).

6. Verfahren nach einem oder mehreren der vorhergehenden Ansprüche, **dadurch gekennzeichnet, dass** die Lüfteröffnung (12,15) fast über die gesamte Höhe der im Wesentlichen rechteckigen Lüfterzarge (11) reicht und die Klappen (17) seitlich davon angeordnet sind.

7. Verfahren nach einem oder mehreren der vorhergehenden Ansprüche, **dadurch gekennzeichnet, dass** die wenigstens eine Lagerbuchse (21) einen als halbringförmiger Bügel aus der Fläche des Basisteils (20) herausstehenden Abschnitt (33) aufweist, der an einer rinnenförmigen Vertiefung (24) im Basisteil (20) angeordnet ist.

8. Verfahren nach einem oder mehreren der vorhergehenden Ansprüche, **dadurch gekennzeichnet, dass** in der Herstellungs-Position die wenigstens eine Klappe (17) unter einem Winkel, vorzugsweise einem rechten Winkel, zur Fläche des Basisteils (20) angeordnet ist.

9. Verfahren nach einem oder mehreren der vorhergehenden Ansprüche, **dadurch gekennzeichnet, dass** die Klappe (17) zwischen Öffnungs- und Schließstellung schwenkbar und in der Herstellungs-Position in Öffnungsstellung ist.

10. Lüfterzarge, insbesondere für Kraftfahrzeugkühler, aus Kunststoff mit einem Basisteil (20) mit mindestens einer Öffnung (16) und mindestens einer daran schwenkbar gelagerten Klappe (17), wobei
sie wenigstens eine Schwenklagerung (18) mit wenigstens zwei Lagerbuchsen (21) und zugehörigen Lagerzapfen (22) aufweist, dass alle Lagerbuchsen (21) die Lagerzapfen (22) gänzlich umschließen, Basisteil (20) und Klappe (17) aus demselben Kunststoff-Spritzgussteil bestehen und die Lagerzapfen (22) einander entgegengesetzt gerichtet sind,
**dadurch gekennzeichnet,**
sich die Klappe (17) zu beiden Seiten der Achse (34) der Schwenklagerung (18) erstreckt, insbesondere außermittig, und bezüglich einer durch Luftanströmung gegen die Klappe (17) ausgeübten Schwenkkraft unterschiedlich wirksame Flächenbereiche auf beiden Seiten schafft, wobei
die Klappe (17) den Rand der Öffnung (16) auf beiden Seiten der Schwenklagerungsachse (34) von entgegengesetzten Richtungen her zumindest teilweise überlappt.

## Claims

1. A method to produce a fan shroud made of plastic, particularly for vehicle radiators, comprising a base part (20) having at least one opening (16), and at least one flap (17) pivotally mounted thereon, wherein the fan shroud (1) has at least one pivot bearing (18) with at least two bearing bushings (21) and corresponding bearing pins (22) for the flap (17), all bearing bushings (21) completely enclose the bearing pins (22), and the bearing pins (22) are facing away from one another, wherein
the whole fan shroud (1) is produced from a base part (20) and flap (17) made of the same plastic injection-molded part, in a mold (27) in an injection-molding process,
a vertical position of the flap (17) with respect to the surface of the base part (20) forms a mold parting plane parallel to the surface of the base part (20), and
the pivot bearing (18) of the flap (17) is produced in that sleeve-shaped protrusions (25) of mold slides (26) of the injection mold (27) engage between the bearing pins (22) and bearing bushings (21), such that the outer surface of the sleeve (25) forms the inner surface of the bearing bushing (21) and the inner surface of the sleeve (25) forms the outer circumference of the bearing pin (22),
**characterized in that,**
upon forming, the flap (17) extends, particularly eccentrically, to on either side of the axis (34) of the pivot bearing (18), and creates surface regions acting differently on either side with respect to a pivot force exerted against the flap (17) by means of air flow, wherein
the flap (17) at least partially overlaps, from opposite directions, the edge of the opening (16) on either side of the pivot bearing axis (34).

2. The method according to claim 1, **characterized in that** the flap (17) and the base part (20) are isolated from one another.

3. The method according to claim 1 or 2, **characterized in that** a circumferential gap (23), which provides space for a mold slide (26) of the injection mold (27), is formed between the bearing bushing (21) and the bearing pin (22).

4. The method according to one or more of the preceding claims, **characterized in that** the bearing bushings (21) are freely accessible on one side, in the axial direction.

5. The method according to one or more of the preceding claims, **characterized in that** the base part (20) has a large surface and a ventilator opening (12, 15), and one or more openings (16) for flaps (17), which consist of the same injection-molded assembly part as the base part (20).

6. The method according to one or more of the preceding claims, **characterized in that** the ventilator opening (12,15) extends almost over the entire height of the substantially rectangular fan shroud (11) and that the flaps (17) are arranged to the side thereof.

7. The method according to one or more of the preceding claims, **characterized in that** the at least one bearing bushing (21) has a section (33) protruding from the surface of the base part (20) as a semicircular bracket, said section being arranged at a channel-shaped recess (24) in the base part (20).

8. The method according to one or more of the preceding claims, **characterized in that**, in the production position, the at least one flap (17) is arranged at an angle, preferably a right angle, against the surface of the base part (20).

9. The method according to one or more of the preceding claims, **characterized in that** the flap (17) can be pivoted between the open and closed positions and is in the open position when in the production position.

10. A fan shroud, particularly for a vehicle radiator, made of plastic and having a base part (20) with at least one opening (16) and at least one flap (17), which is pivotally mounted on said base part, wherein
said fan shroud has at least one pivot bearing (18) with at least two bearing bushings (21) and corresponding bearing pins (22), wherein all bearing bushings (21) completely enclose the bearing pins (22), the base part (20) and flap (17) consist of the same plastic injection-molded part, and the bearing pins (22) are facing away from one another,
**characterized in that**
the flap (17) extends, particularly eccentrically, to either side of the axis (34) of the pivot bearing (18) and creates surface regions acting differently on either side with respect to a pivot force acting on the flap (17) by means of air flow, wherein
the flap (17) at least partially overlaps, from opposite directions, the edge of the opening (16) on either side of the pivot bearing axis (34).

## Revendications

1. Procédé de fabrication d'un châssis de ventilateur en plastique, en particulier pour refroidisseur de véhicule automobile, constitué d'un élément de base (20) avec au moins une ouverture (16) et d'au moins un clapet (17) qui y est logé de manière pivotante, dans lequel le châssis de ventilateur (1) pour le clapet (17) présente au moins un palier pivotant (18) avec au moins deux coussinets de palier (21) et des axes de palier (22) appartenant aux coussinets de palier, tous les coussinets de palier (21) entourent entièrement les axes de palier (22) et les axes de palier (22) sont orientés opposés l'un à l'autre, dans lequel
l'ensemble du châssis de ventilateur (1) constitué d'un élément de base (20) et d'un clapet (17) est fabriqué à partir de la même pièce moulée par injection en plastique dans un moule de moulage par injection (27) dans une opération de moulage par injection,
une position du clapet (17) perpendiculaire à la surface de l'élément de base (20) forme un plan de séparation de moule parallèlement à la surface de l'élément de base (20) et
le palier pivotant (18) du clapet (17) est fabriqué par le fait que des saillies en forme de douille (25) de coulisses de moule (26) du moule de moulage par injection (27) viennent en prise entre l'axe de palier (22) et les coussinets de palier (21) de sorte que la surface extérieure de la douille (25) moule la surface intérieure du coussinet de palier (21) et la surface intérieure de la douille (25) forme la périphérie extérieure de l'axe de palier (22),
**caractérisé en ce**
**que** le clapet (17) s'étend, après le démoulage, vers les deux côtés de l'axe (34) du palier pivotant (18), en particulier de manière excentrée, et crée des zones de surface agissant différemment sur les deux côtés par rapport à une force de pivotement exercée par afflux d'air contre le clapet (17), dans lequel
le clapet (17) chevauche au moins en partie le bord de l'ouverture (16) sur les deux côtés de l'axe de palier pivotant (34) depuis des directions opposées.

2. Procédé selon la revendication 1, **caractérisé en ce que** le clapet (17) et l'élément de base (20) sont séparés l'un de l'autre.

3. Procédé selon la revendication 1 ou 2, **caractérisé en ce qu'**une fente périphérique (23) est formée entre le coussinet de palier (21) et l'axe de palier (22), laquelle fente laisse de la place pour une coulisse de moule (26) du moule de moulage par injection (27).

4. Procédé selon l'une ou plusieurs des revendications précédentes, **caractérisé en ce que** les coussinets de palier (21) sont librement accessibles d'un côté dans la direction axiale.

5. Procédé selon l'une ou plusieurs des revendications précédentes, **caractérisé en ce que** l'élément de base (20) est à grande surface et présente une ouverture de ventilateur (12, 15) et une ou plusieurs ouvertures (16) pour clapets (17), qui se composent de la même pièce moulée par injection de montage que l'élément de base (20).

6. Procédé selon l'une ou plusieurs des revendications précédentes, **caractérisé en ce que** l'ouverture de ventilateur (12, 15) s'étend presque sur toute la hauteur du châssis de ventilateur sensiblement perpendiculaire (11) et les clapets (17) sont agencés sur les côtés de celle-ci.

7. Procédé selon l'une ou plusieurs des revendications précédentes, **caractérisé en ce que** l'au moins un coussinet de palier (21) présente une section (33) faisant saillie à partir de la surface de l'élément de base (20) en tant qu'étrier en forme de demi-anneau, laquelle section est agencée au niveau d'un évidement en forme de gouttière (24) dans l'élément de base (20).

8. Procédé selon l'une ou plusieurs des revendications précédentes, **caractérisé en ce que** l'au moins un clapet (17) est agencé dans la position de fabrication selon un angle, de préférence un angle droit, par rapport à la surface de l'élément de base (20).

9. Procédé selon l'une ou plusieurs des revendications précédentes, **caractérisé en ce que** le clapet (17) est pivotant entre la position d'ouverture et la position de fermeture, et est en position d'ouverture dans la position de fabrication.

10. Châssis de ventilateur, en particulier pour refroidisseur de véhicule automobile, en plastique muni d'un élément de base (20) avec au moins une ouverture (16) et au moins un clapet (17) qui y est logé de manière pivotante, dans lequel il présente au moins un palier pivotant (18) avec au moins deux coussinets de palier (21) et des axes de palier (22) appartenant aux coussinets de palier, que tous les coussinets de palier (21) entourent entièrement les axes de palier (22), l'élément de base (20) et le clapet (17) se composent de la même pièce moulée par injection en plastique et les axes de palier (22) sont dirigés de manière opposée l'un à l'autre,
**caractérisé en ce**
**que** le clapet (17) s'étend vers les deux côtés de l'axe (34) du palier pivotant (18), en particulier de manière excentrée, et crée des zones de surface agissant différemment par rapport à une force de pivotement exercée par afflux d'air contre le clapet (17) sur les deux côtés, dans lequel
le clapet (17) chevauche au moins en partie le bord de l'ouverture (16) sur les deux côtés de l'axe de palier pivotant (34) depuis des directions opposées.
